# EUROPEAN PATENT SPECIFICATION

(11) **EP 2 816 684 B1**
(45) Date of publication and mention of the grant of the patent: **02.11.2016**
(21) Application number: 14173199.2
(22) Date of filing: 20.06.2014
(51) Int. Cl.: H02G 1/00, H02G 3/00, H02G 3/12

(54) **Assembly for building into a wall, and method for building in such an assembly**
Anordnung zur Errichtung in einer Wand und Verfahren zum Aufbau in einer solchen Anordnung
Ensemble pour construire dans une paroi et procédé de construction dans un tel ensemble

(30) Priority: 21.06.2013 BE 201300429
(43) Date of publication of application: 24.12.2014
(73) Proprietor: Niko NV, 9100 Sint-Niklaas (BE)
(72) Inventor: Totté, Lieven, 9140 Elversele (BE)
(74) Representative: D'Halleweyn, Nele Veerle Trees Gertrudis

(56) References cited:
- DE-A1- 1 490 327
- FR-A5- 2 053 463
- US-A- 6 086 390
- US-B1- 6 435 903

## Description

The current invention relates to an assembly with a functional module connectable via at least one cable, the assembly being for building into a wall, in particular a prefabricated or prefab wall. The invention also relates to a method for building such an assembly into a wall.

Mounting boxes for building into a wall are known in the art. Such mounting boxes have as an advantage that an electric or electronic function such as a socket, a switch, a network termination point and the like, can be safely built into a wall, whereby the necessary cable connections are realized in the mounting box so that, after building in, only a small volume of the functional part will be outside the volume of the wall itself. Such mounting boxes have, however, the disadvantage that an electrician has to perform a relatively large amount of work on site, such as pulling cables, connecting the cables, mounting the connected functional module in the mounting box, and attaching a cover frame. This requires skilled staff. Such mounting boxes are shown in US-B-6435 903 and FR-A-2053 463.

Embodiments of the invention aim at providing an assembly for building into a wall that allows having less work to be carried out on site by an electrician. More particularly, the invention aims at providing an assembly with a mounting box and an insert part with a functional module that can be built in during the manufacture of a prefabricated wall, such that relatively little installation activities are required on the construction site.

According to an aspect of the invention, the assembly comprises a mounting box, an insert part mountable in the mounting box and comprising a functional module connectable by at least one cable, and a cover element that is mountable on the insert part after building the mounting box into the wall. The mounting box and the insert part are adapted for being able to position the insert part at least in a building-in position and a use position and for moving the insert part from the building-in position to use position. In the use position, the insert part is partly protruding through an open side of the mounting box so that the cover element is mountable on the insert part. In the building-in position, the insert part does not protrude through the open side of the mounting box or protrudes less through the open side than when in the use position, i.e. the insert part is positioned deeper into the mounting box so that the open side is easier to close off to protect the functional module when building the mounting box into the wall.

By providing, on the one hand, a building-in position and, on the other hand, a use position, it is possible to place the insert part in the building-in position during the process of building the mounting box into the wall, whereby the open side may possibly be closed off, such that during building in no dirt can enter into the mounting box. After building the mounting box into the wall the insert part can be moved from the building-in position to the use position, and the cover element can be mounted on the insert part. Such an assembly is particularly interesting for use in prefabricated walls. Such an assembly allows mounting the insert part into the mounting box and connecting the cables at a first location, whereby the open side of the mounting box is or has been covered. The closed mounting boxes with cables can then be transported to a second location where they will be built into the prefabricated walls. When the insert part is located in the building-in position, the mounting box can preferably be placed with the closed off open side in the mould. Hereby the closed off open side is facing the bottom of the mould. Wall material is then provided over the mounting box. In this way, a prefabricated wall is obtained in which mounting boxes are provided with a functional module already mounted in these mounting boxes. The prefabricated walls with the closed off mounting boxes can then be transported to a construction site. Because the mounting boxes are completely closed off they are protected during transport and storage on site against damage and/or soaking in of, for example, rainwater. On the construction site, after installation of the wall, the closed off side can then be reopened, after which only the insert part has to be placed in the use position and the cover element has to be mounted. This work can be carried out by untrained personnel. For the sake of completeness it is noted that the first and second location could also be the same, and that building in the insert parts in the mounting box and/or connecting the cables can also be performed in the mould.

Preferably, the assembly furthermore comprises a removable cover. In case of a cover the open side of the mounting box is adapted for being closed off in the building-in position of the insert part. The cover can also be formed as one piece with the mounting box, on the condition that this can be removed after building in the mounting box, for example by tearing off a cover connected to the mounting box via a tearing line.

In an advantageous embodiment the cover is provided with a coupling means for coupling the cover to the insert part. Such a coupling means is preferably designed to pull the insert part from the building-in position to the use position when removing the cover. Such an implementation has the advantage that, when removing the cover, the insert part is automatically placed in the use position. According to a possible embodiment the coupling means comprises an arm with a snap hook which is arranged to clamp behind the insert part. Thus, when the cover is pulled the arm will pull along the insert part in the forward direction. In the mounting box preferably locking means are provided which make sure that the insert part is secured in the use position when this position is reached.

Furthermore, the cover may be provided with a grip which can be manipulated by a tool or by the hand of the installer for removing the cover. This further simplifies the work to be carried out on site.

The cover element is preferably a cover frame so dimensioned that, in the use position of the insert part, it can fit well around the from the mounting box protruding part of the functional module of the insert part.

According to an advantageous embodiment the insert part is provided with at least two positioning elements. This could, for example, be two clamps with outwardly projecting parts. The mounting box is preferably provided at the inner side with a first profiling determining the building-in position and a second profiling determining the use position. These first and second profilings are adapted to cooperate with the at least two positioning elements for being able to secure the insert part in the building-in position or the use position. Hereby the first profiling and the positioning elements are preferably arranged such that the insert part can be pushed or pulled from the building-in position to the use position.

The functional module can, for example, be one of the following: an electrical socket, a switch, a network termination point, a TV connection point or a telephone connection point. More generally, the functional module can be any component which has to be electrically or electronically connected. Instead of a functional module, a shut-off plate can also be supplied within the mounting box. Furthermore, a person skilled in the art understands that the mounting box can be for one functional module, but can also be adapted for comprising more than one functional module. If more than one functional module is present, typically multiple insert parts are used.

To make the mounting of the insert part in the mounting box more easy, the mounting box can be provided with guiding elements on the inner wall for guiding the insert part.

According to an advantageous embodiment the mounting box contains a tubular part and a closing part. The tubular part has an open front end and an open back end, and the closing part is mountable against the open back end to close this open back end. In the use position the insert part protrudes from the open front end. The tubular part and the closing part are preferably arranged for tightly enclose one or more flexible or rigid conduits in between. Such an embodiment of the mounting box makes it possible to make the cable connections via the open back end. The cables to be connected are hereby preferably incorporated in a cable duct which is then receivable between the tubular part and the closing part, and can preferably be clamped in the tubular part prior to mounting of the closing part. This allows to first provide the functional module and the one or more conduits in the mounting box first and to subsequently connect the electric cables. Because of this, the cables can be easily connected with the functional module. In comparison with solutions known in the state of the art, where conduits must be pushed through an opening, conduits can now be provided much easier: a conduit can, prior to providing the closing part, be fixed to the tubular part, typically in a part of a cable conduit with is provided at the open back end, after which one or more cables can be connected.

According to a further developed embodiment the mounting box and the insert part are adapted to position the insert part in an installation position. In the installation position, the at least one cable can be connected with the functional module through the open back end of the tubular part. The mounting box and the insert part are hereby designed such that the insert part can be brought from the installation position to the building-in position. In this way an installer can first connect the cables and then bring the insert part in the building-in position, after which the closing part can be provided on the tubular part, such that the at least one conduit is fixed in the mounting box, and the mounting box can be built into the wall. If the conduit is provided with ribs, as is the case for a typical flexible conduit, the conduit can for example be held between two ribs between the closing part and the tubular part.

According to another aspect of the invention, a method is provided for building a functional module into a wall. The method comprises providing a mounting box, and an in the mounting box mountable insert part with a functional module. The insert part is mounted in a building-in position in the mounting box. The mounting box is built into a wall, whereby one side of the mounting box is adjacent to a surface of the wall. After building in this side of the mounting box is opened and the insert part is moved from the building-in position to the use position. The cover element is then mounted on the insert part. Such a way of working allows to make prefabricated walls in which functional modules are built in.

According to a possible embodiment the mounting box has an open side which is intended to be adjacent the wall surface. This open side is then preferably closed off, for example via a removable cover, before mounting in the mounting box.

The at least one cable is preferably connected with the functional module prior to building of the mounting box into the wall. According to an advantageous embodiment the mounting box is a two-part unit with two tubular parts and a closing part. The tubular parts have an open front end and an open back end, and the at least one cable is connected with the functional module through the open back end, after which the closing part is connected to the open back end. Prior to building in the mounting box, the open front end is closed off. Moving from the building-in position to the use position then occurs by pulling the insert part partly out of the open front end. The at least one cable is preferably provided in one or more cable conduits, and each conduit is provided between the tubular part and the closing part.

Building the mounting box into a wall preferably comprises the following steps. In a first step the closed off mounting box is placed in a mould. A side of the mounting box intended to be adjacent to the cover frame is hereby directed towards the bottom of the mould. In possible embodiments where a cover is used to close off an open side of the mounting box, this cover can, for example, be glued to the bottom of the mould. Also other fixing or positioning techniques can be thought of, as will be clear from the figure description below. After positioning the closed off mounting box in the mould the wall material is poured over the mounting box.

The present invention will be explained on the basis of a number of, by no means limiting, exemplary embodiments with reference to the attached drawings, in which:
Figures 1A-1G schematically illustrate an embodiment of an assembly and a method according to the invention;
Figures 2A and 2B illustrate dismounted perspective views of a first embodiment of an assembly according to the invention, seen from two sides;
Figures 3A-3C illustrate sections of a mounting box with a functional module in respectively an installation position (figure 3A), a building-in position (also called pouring position) (figure 3B) and a use position (figure 3C);
Figures 4A and 4B show a perspective view of the assembly of figures 2A and 2B in the assembled state, in which the functional module is in the building-in position, and the cover is attached to the mounting box, respectively seen from a back side and a front side;
Figure 5 shows a perspective view of the assembly of figures 2A and 2B in the assembled state, in which the functional module is in the use position and a cover frame is mounted on the mounting box;
Figure 6 shows a perspective detailed view of the functional module in the building-in position, where parts of the mounting box are omitted for clarity reasons;
Figure 7 shows a perspective detailed view of the functional module in the use position, whereby part of the mounting box is omitted for clarity reasons;
Figures 8A and 8B schematically illustrate another embodiment of an assembly according to the invention.

In the drawings, identical or similar parts in different embodiments are referred to with the same reference numbers.

The present invention provides an assembly for building into a wall, especially a prefabricated or prefab wall. The assembly comprises a mounting box. The assembly furthermore comprises an insert part mountable in the mounting box and comprising a functional module connectable with at least one cable. Furthermore, the assembly comprises a cover element mountable on the insert part after building the mounting box into the wall. The mounting box and the insert part are adapted for being able to position the insert part at least in a building-in position and a use position and for moving the insert part from the building-in position to the use position, whereby, in the use position, the insert part partly protrudes out of an open side of the mounting box so that the cover element can be attached to the insert part, and whereby, in the building-in position, the insert part does not protrude out of the open side or protrudes less out of the open side than in the use position. The assembly furthermore comprises a cover for closing off an open side of the mounting box in the building-in position of the insert part. The cover is provided with a coupling means for coupling the cover to the insert part, the coupling means being designed to pull the insert part from the building-in position to the use position when removing the cover.

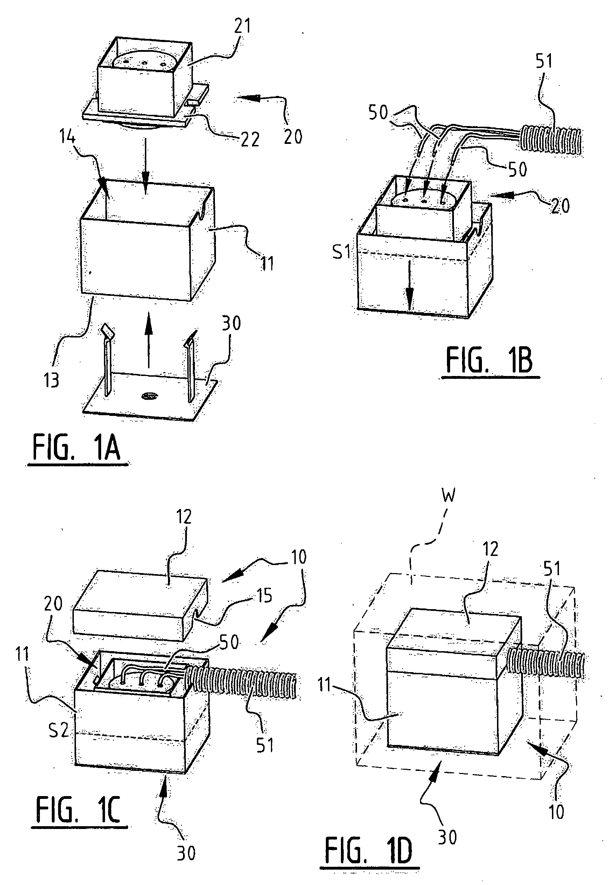

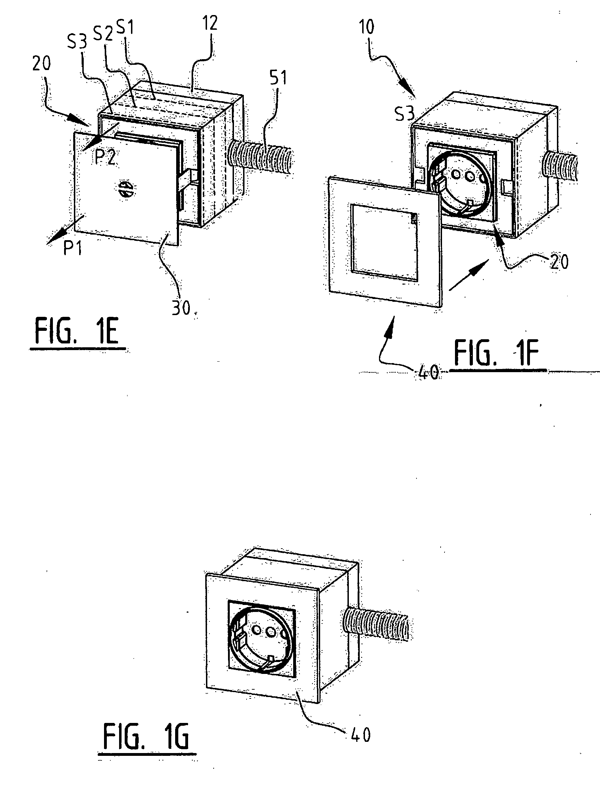

Embodiments of an assembly and a method according to the invention are first schematically illustrated based on figures 1A-1G. The assembly comprises a mounting box 10, an insert part 20 with a via at least one cable 50 connectable functional module 21, a cover 30, and a cover frame 40. The mounting box 10 comprises a tubular part 11 and a closing part 12. The tubular part 11 has an open front end 13 and an open back end 14. The terms "front" and "back" refer to the front side and back side when the mounting box 10 is built into a vertical prefabricated wall W (the position which is illustrated in figures 1E-1G). In the steps illustrated in figures 1A-1D, the open front end 13 is located at the bottom and the open back end 14 is located at the top, because figures 1A-1D show the position when the mounting box 10 is placed in a mould in which the prefabricated wall W is manufactured in a horizontal position.

Figure 1A illustrates the steps of providing a cover 30 on the open front end 13 of the tubular part 11, and providing the insert part 20 via the open back end 14 in the tubular part 11 of the mounting box 10. In addition to the functional module 21, the insert part 20 typically comprises a mounting profile 22 which is adapted to mount the insert part 20 in the tubular part 11. According to a possible embodiment, the insert part 20 is mounted in an installation position S1 in the tubular part 11; see the dotted line in figure 1 B that schematically shows the location of the mounting profile 22. In this installation position S1, the cables 50 can easily be connected with the functional module 21, see figure 1B. Typically, a first conduit 51 can be fixed to the tubular part 11 (see also figure 1C), after which the cables 50 are connected. According to another design, the cables 50 may be connected outside the tubular part 11 (and not in the installation position S1), after which the insert part 20 is provided in the tubular part 11 via the open back end 14.

It is noted that the cover 30 should not necessarily be provided in a first step. According to an embodiment, the cover 30 can be provided after connecting the cables 50, or even after completing the step illustrated in figure 1C, see below. Connecting the cables 50 should not necessarily be done via the open back end 14. According to an embodiment, the mounting box 10 can be implemented as a single part with a closed back end 14 (and thus without a separate closing part 12) and connecting the cables 50 is done through the open front end 13, prior to providing the insert part 20 in the mounting box 10. In such an embodiment, the insert part 20 will also be provided in the mounting box 10 through the open front end 13.

After connecting the cables 50 the insert part 20 is brought in a building-in position S2, see the dotted line in figure 1C which schematically shows the location of the mounting profile 22. In this building-in position, the insert part 20 is provided deeper in the tubular part 11 in the direction towards the open front end 13 compared to the installation position S1. In this building-in position, the closing part 12 of the mounting box 10 is provided on the tubular part 11, with insertion of the cable conduit 51 in which the cables 50 are provided. This cable conduit 51 can be a flexible cable conduit or a rigid cable conduit. The tubular part 11 and the closing part 12 are preferably designed in such a way that, when providing the closing part 12 onto the tubular part 11, a cable tray 15 is defined for receiving the cable conduit 51. The closing part 12 and the tubular part 11 preferably connect closely to the cable conduit 51, and the tubular part 11 is provided with a cable conduit receiving part in which the cable conduit 51 can be clamped while connecting the cable(s) 50. The cable conduit 51 can hereby, for example, be clamped between two ribs in an adapted cutout or cable tray that is adjacent to the open back end 14, see figure 1C. Although figures 1B and 1C show an installation position which is different from the building-in position, it is also possible to provide a single installation and building-in position, i.e. the installation and building-in position may, according to embodiments of the invention, be the same. According to yet another embodiment, the cables 50 are first connected to the functional module 21, and the insert part 20 is then immediately brought into the in figure 1C illustrated building-in position.

After providing the closing part 12 and the cover 30 the assembled assembly can be placed into the mould, after which a wall material is poured into the mould for forming the prefabricated wall W.

It has to be noted that one or more of the steps illustrated in figures 1A-1C may typically be performed at a first location, after which the closed mounting boxes 10 with conduits 51 are transported to a second location where the prefabricated wall is manufactured. However, it is also possible to perform one or more of the steps illustrated in figures 1A-1C directly in the mould prior to pouring the wall material into the mould. When the mounting box 10 is placed in the mould, the cover 30 is facing the bottom of the mould, as the bottom of the mould is adjacent to a surface of the prefabricated wall in which the assembly is to be built in. The conduit 51, which is located at the back side of the mounting box 10, will thus be embedded in the prefabricated wall.

After placing the prefabricated wall at the construction site, the mounting box 10 is oriented in the position illustrated in figure 1E. The cover 30 is hereby flush-mounted with the outer surface of the prefabricated wall. After placing the prefabricated wall at the construction site the cover 30 can be removed, see arrow P1. According to an advantageous embodiment, removal of the cover 30 simultaneously ensures movement of the insert part 20 from the building-in position S2 to a use position S3, see figures 1E and 1F and arrow P2. In the use position S3 the insert part 20 is partly protruding out of the mounting box 10. In this use position, the cover frame 40 is mountable on the insert part 20, as illustrated in figure 1G. As can be best seen in figure 1E, the installation position S1, the building-in position (also called transport position) S2 and the use position S3 are three subsequent positions in which the insert part 20 can be positioned, looking from the open back end 14 to the open front end 13 of the tubular part 11.

Although the mounting box 10, the insert part 20, the cover 30, and the cover frame 40 are schematically shown in simplified format in figures 1A-1G, a person skilled in the art understands that these elements are provided with the necessary profilings and cutouts to allow attachment of the insert part 20 in the mounting box 10, the provision of the cover 30 to the mounting box 10, the mounting of the cover frame 40 on the insert part 20, the provision of the closing part 12 on the tubular part 11, etc. The cover 30 is also provided with a coupling means 31, 32 for coupling the cover 30 with the insert part 20 (see further). The coupling means (31, 32) is designed to pull the insert part 20 from the building-in position to the use position when removing the cover 30 according to the arrows P1, P2 in figure 1E. As illustrated in figures 1F and 1G, the cover frame 40 is so dimensioned that, in the use position of the insert part 20, it extends around a from the mounting box 10 protruding part of the functional module 21 of the insert part 20.

Figures 1A-1G illustrate an insert part 20 with a socket 21 as a functional module. The functional module 21 may, however, also be another functional module that has to be connected by means of a cable 50, like for example a switch, a network termination point, a TV connection point, and more generally any electrical or electronic functional module which has to be built into a wall.

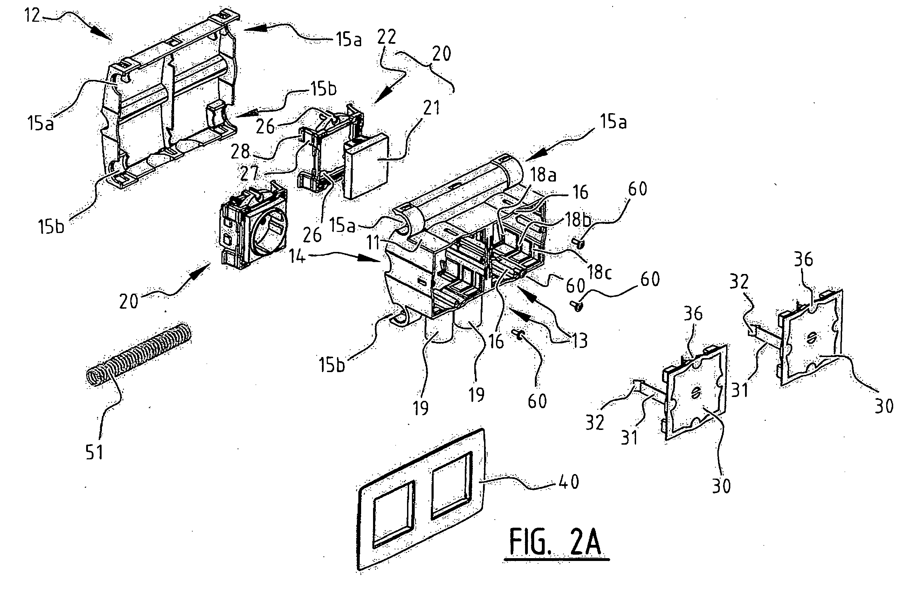

Now a more detailed first embodiment of an assembly according to the invention will be described based on figures 2A-2B, 3A-3C, 4A-4B, 5, 6 and 7. In this first embodiment, the mounting box 10 is intended for building in two functional modules 21. In the illustrated example, the functional modules 21 are a socket and a switch. The mounting box 10 in the first embodiment comprises two tubular parts 11 which have been designed as a single piece, and a closing part 12. A first insert part 20 comprises a mounting profile 22 and a shut-off plate 21. A second insert part 20 comprises a mounting profile 22 and a socket module 21. Each tubular part 11 has an open front end 13 and an open back end 14. The open front end 13 can be closed using a cover 30. The open back end 14 is closed with the closing part 12 of the mounting box 10.

To facilitate mounting of the insert part 20 in the tubular part 11, guiding elements 16, 26 may be provided. These guiding elements 16, 26 comprise a first profiling 16 provided in an inner wall of the tubular part 11 and a complementary profiling 26 provided in the mounting profile 22. The first profiling 16 is here formed as a protruding rounded rib which runs in a longitudinal direction of the tubular part 11 and the second profiling 26 is formed as a receiving channel for this rib. However, a person skilled in the art understands that many other guiding elements are possible within the framework of the invention.

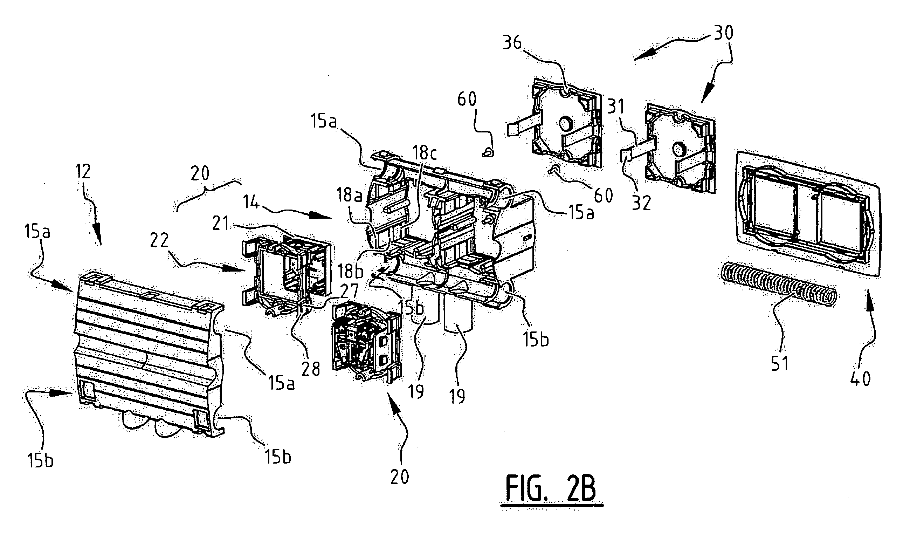

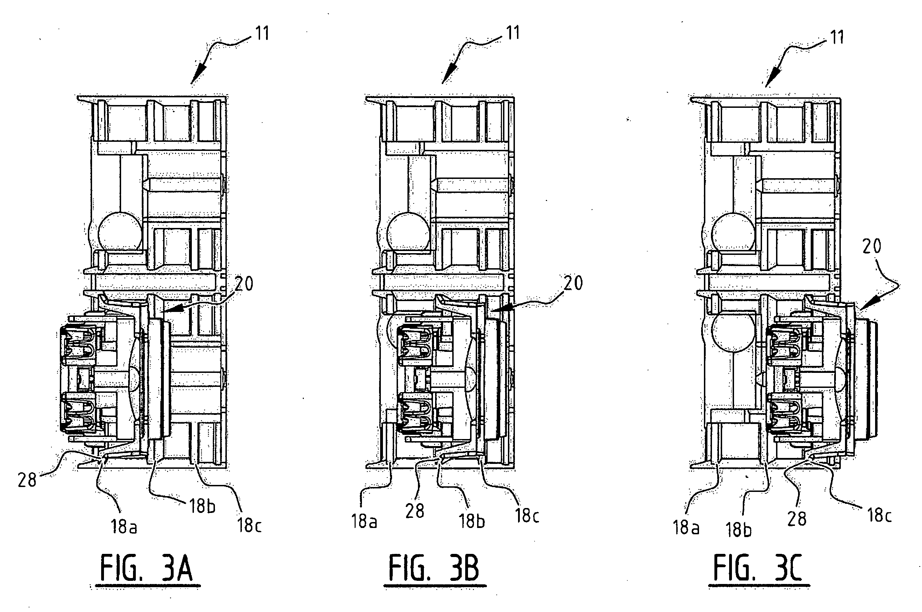

The mounting profile 22 is further provided with four positioning elements 27 which are situated near the four corners of the mounting profile 22. The positioning elements 27 are designed as spring-loaded lips with outwardly protruding thickenings 28 intended for being received in the customized cutouts 18 in the inner wall of the tubular part 11, as can best be seen in figures 2A and 2B, and 3A-3C. In the illustrated embodiment three sets of cutouts 18a, 18b, 18c are provided which correspond to an installation position (18a), a building-in position (18b), and a use position (18c). This ensures that the insert part 20 with the functional module 21 can be positioned into three respective positions, namely an installation position S1, a building-in position S2 (also called transport position or pouring position), and a use position S3, see respectively figures 3A-3C. In the installation position S1, a back side of the functional module 21 protrudes somewhat out of the open back end 14 of the tubular part 11, such that the cables 50 are easy connectable with the functional module 21. As explained in the context of figures 1A-G, connecting of the cables 50 can be performed at a first location, after which the insert part 20 is placed in the building-in position, the closing part 12 is provided, and the whole can be transported to a second location where the prefabricated walls are then manufactured. According to another embodiment, connecting the cables 50 can be performed in the mould before manufacturing of the prefabricated wall. The assembled assembly (with insert part 20 in the installation position) is then placed in the mould with the cover 30 facing the bottom. Connecting the cables 50 can thus be performed while the parts 11 are provided in the mould. After connecting the cables 50, the insert part 20 can be pushed downwards in the tubular part 11 to bring the insert part 20 in the building-in position, see figure 3B. In this position, the closing part 12 can be provided on the tubular parts 11.

The one or more cables 50 are typically provided in a rigid or flexible conduit 51 which is, prior to connecting the cables 50, fixed in a conduit receiving part 15b which is provided at the open back end 14 of the tubular part 11. After providing the closing part 12, the conduits 51 are fixed between the closing part 12 and the tubular parts 11. For this, the closing part 12 and the tubular parts 11 are designed such that they define a cable tray 15a, 15b in which a cable conduit 51 can be provided. In the illustrated embodiment, cable trays 15a, 15b are provided on opposite sides of the functional modules 21, in the example given at a top and a bottom of the tubular part 11. However, designs can be thought of in which only one cable tray 15a, 15b is provided. For example, one cable tray 15a can be formed at the top of the functional module 21, or one cable tray 15b can be provided at the bottom of the functional module 21, or one cable tray can be provided at the middle of the functional module 21 (in between the top and the bottom of the functional module 21). In addition, two additional cable trays 19 can be provided which are directed transversely to the cable trays 15a, 15b. The cable trays 19 are typically intended for receiving rigid conduits 74. Cable trays 15a, 15b are typically intended for receiving conduits 51 to realize a connection between a first built-in mounting box 10 and a built-in mounting box 10 at a certain distance from the first built-in mounting box 10, while cable trays 19 are intended to receive cables for connection to a main electricity line. It is also possible to run conduits 51, 74 through a mounting box 10 without the cables present therein being connected. The conduits 51, 74 can also be empty, or just comprise a pull wire with which, at the construction site, a cable can be pulled up to the mounting box 10.

The tubular part 11 may preferably be formed such that the part that defines the cable tray 15a, 15b is designed to tightly contain conduit 51. In that way the one or more conduits 51 can be clamped in the tubular part 11 prior to mounting the closing part 12.

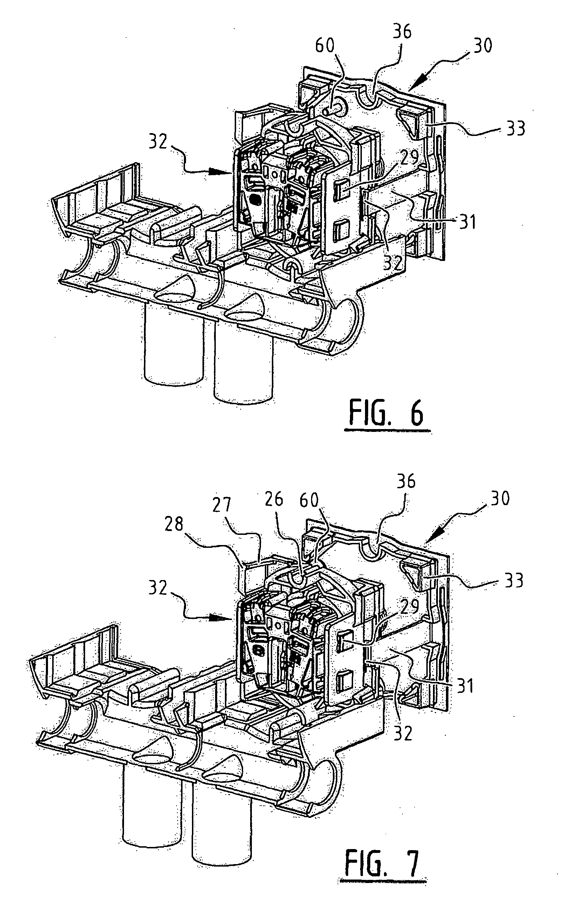

The cover 30 comprises a coupling means 31, 32 for coupling the cover 30 to the insert part 20. The coupling means 31, 32 is designed to simultaneously pull the insert part 20 from the building-in position to the use position when removing the cover 30. For that purpose, the cover 30 may, at its back side, be provided with two arms 31 with snap hooks 32. These snap hooks 32 are meant to cooperate with the insert part 20 when the insert part 20 is in the building-in position, as best illustrated in figure 6. In order to facilitate the provision of the cover 30, the insert part 20 is provided with guiding parts 29 for the arms 31. In the illustrated embodiment, two arms 31 are provided which are intended to extend on both sides of the functional module 21. A person skilled in the art understands that other implementations, for example with four arms 31, can be thought of. Furthermore, cutouts 36 are provided in the extension of the rounded ribs 16 provided on the inner wall of the tubular part 11. Screw heads 60 fit into the cutouts 36. Further, the bottom of the cover 30 is provided with corner parts 33 close to the corners which are intended to fit into the corners of the tubular part 11 (see figure 6). The arms 31 with snap hooks 32 are designed such that, on the one side, they are able to move the insert part 20 from the building-in position to the use position and, on the other hand, after the insert part 20 is brought into the use position, to move along the insert part 20 to completely remove the cover 30, see figure 7. This is further achieved by the presence of screws 60 which ensure that the insert part 20 cannot be pulled out of the tubular part 11; see figures 2A and 2B and figure 7. It has to be noted that instead of screws 60, also an abutment part which is for example formed in one piece with the tubular part 11 can be provided.

The cover 30 is at its front side provided with two cutouts 37 to form a grip in which, for example, a tool can be positioned. In that way the cover 30 can easily be removed. This is just an example and a person skilled in the art understands that other grips or designs can be thought of to enable easy removal of the cover 30.

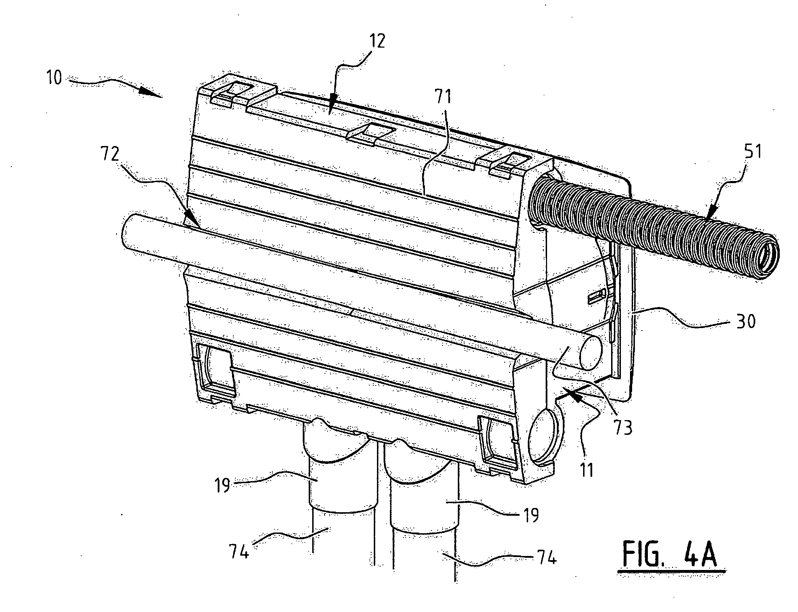

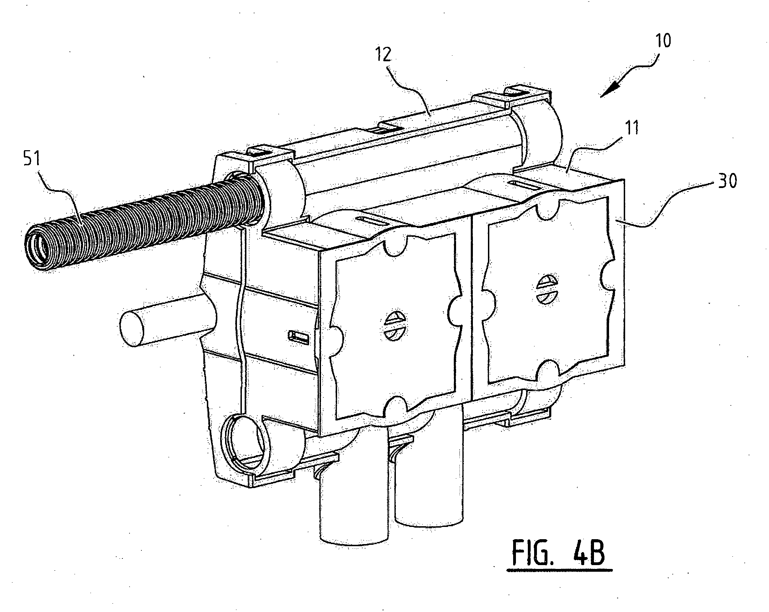

Figures 4A and 4B illustrate the assembly in the assembled state in which covers 30 are provided on the open front end 13 of the mounting box 10. This assembled state can be achieved in a mould. The covers 30 are hereby placed on the bottom of the mould. The closing part 12 can, at its outer back side, be provided with alignment grooves or ribs 71 and a channel 72 for receiving a rod 73 of a reinforcement; see figure 4A. This allows for proper alignment of the assembly in the mould. In the cable trays 19 rigid tubes 74 can be provided. These rigid conduits 74 can be provided at the bottom of the wall using a magnet. In that way the mounting box 10 can further be fixed to the bottom of the mould. The rigid conduits 74 may, for example, be connected to the magnets in such a way that they push the mounting box 10 against the bottom of the mould, thereby ensuring a stable positioning of the mounting boxes 10 in the mould. Also the provision of a reinforcement rod 73 ensures that the mounting boxes 10 are further pushed against the bottom of the mould.

According to other embodiments, the covers 30 can be provided with a double-sided tape, preferably a tape which, at one side, adheres well to the cover 30 and at the other side adheres well to the bottom of the mould. According to an alternative embodiment, a hot-melt adhesive can be provided on the cover 30 to glue the mounting box 10 to the bottom of the mould. According to further developed embodiments not illustrated here, positioning feet, which break off when the mounting box 10 is pressed against the bottom of the mould, can be provided on the covers 30. This makes it possible to, for example, provide double-sided tape to the covers 30 and to then place them at the bottom of the mould without the tape touching the bottom. This allows for proper alignment of the mounting boxes 10 before they are finally fixed to the bottom by pushing the mounting box 10 down, resulting in the positioning feet breaking off, and the mounting box 10 being stuck to the bottom. According to another embodiment, the covers 30 can be provided with glue channels in which glue can be injected. In that way glue can be injected after the mounting box 10 has been placed on the mould. These glue channels can be provided in such a way that an installer can easily check when a sufficient amount of glue has been provided in the glue channels.

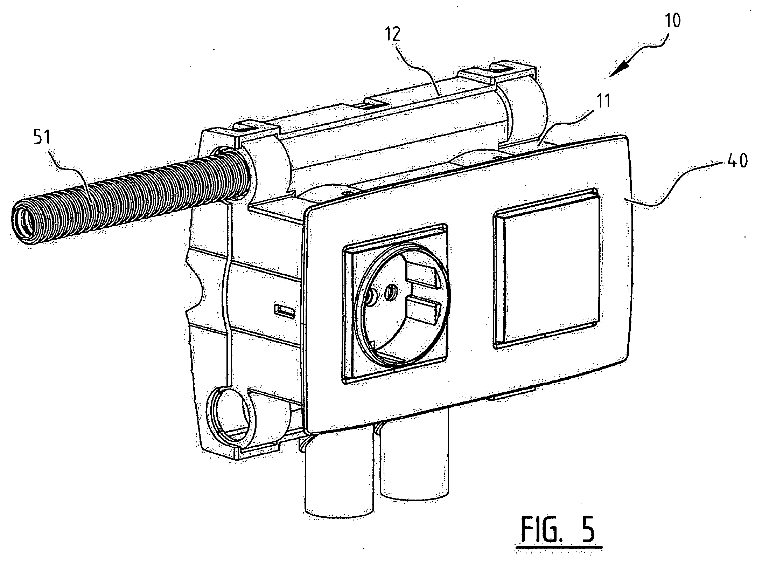

Figure 5 illustrates the assembly of figures 2A and 2B in the assembled state after the covers 30 have been removed and the cover frame 40 has been mounted. The cover frame 40 is preferably simply clickable onto the insert parts 20. Therefore, the insert part 20 is provided with profilings and/or cutouts, allowing a coupling with the back side of profilings and/or cutouts provided in the back side of the cover frame 40. In the illustrated example, the first insert part 20 comprises a shut-off plate 21 which is attached to a mounting profile 22 (the shut-off plate 21 could also be replaced by a switch module), and the cover frame 40 is clickable on the mounting profile 22. The second insert part 20 comprises a socket module 21, a mounting profile 22, and a central plate, and the cover frame 40 is clickable on the central plate, see figures 2A and 2B.

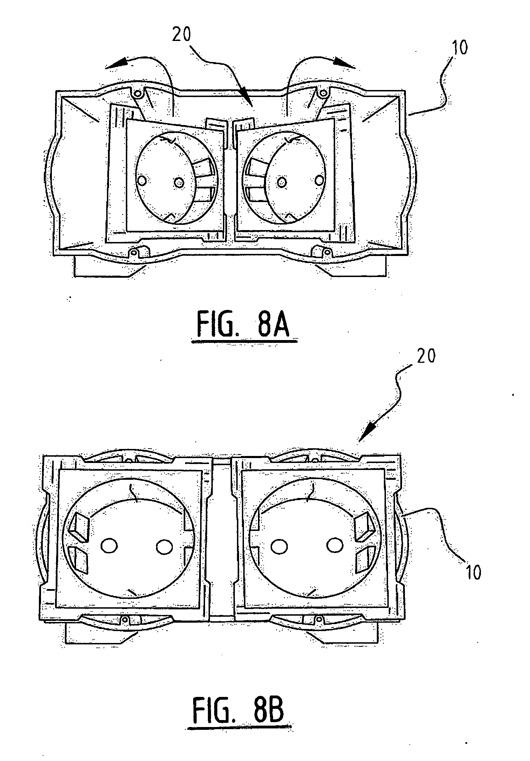

Figures 8A and 8B illustrate a further embodiment of an assembly according to the invention in a building-in position and a use position respectively. According to this embodiment two insert parts 20 are rotatably mounted in a mounting box 10. More specifically, each insert part 20 is hingedly connected to an inner wall of the mounting box 10. In this way the insert parts 20 can be rotated in a building-in position in which they do not protrude out of the mounting box 10, such that a cover 30 can be provided for closing the mounting box 10. After building the mounting box 10 into a wall, the cover 30 can be removed and the insert parts 20 can be rotated to a use position, see figure 11B, after which a cover frame 40 is mountable on the insert parts 20. The mounting box 10 and the insert parts 20 are preferably designed such that the rotating of the insert parts 20 towards the use position ensures that these insert parts 20 are locked in the use position, which means that they cannot be rotated back to the building-in position. To this end, for example spring-loaded lips can be provided at the top and/or bottom side of the insert parts 20, which spring-loaded lips spring out of the mounting box 10 when the final position is reached.

The above-described embodiments have the advantage that the functional modules 21 can be easily built into prefabricated walls, whereby, when providing the prefabricated walls at the construction site, only minimal actions are necessary to have the functional modules 21 up and running, resulting in a big time saving at the construction site site. The workmen at the construction site merely need to remove the cover 30 and mount a cover frame 40 and/or central plate 23 and/or shut-off plate. In that way, the final assembly of the functional modules 21 can be done by untrained staff and rather quickly. In addition, embodiments of assemblies and methods according to the invention guarantee that the functional modules 21 are well positionable in the walls, by which a very good alignment of the cover frames 40 is obtained when finishing the installation.

The invention is not limited to the above described exemplary embodiments, and a person skilled in the art understands that many modifications can be thought of within the scope of the invention, which is only determined by the following claims.

## Claims

1. Assembly for building into a wall (W), especially a prefabricated wall, comprising a mounting box (10), an insert part (20) mountable in the mounting box (10) and comprising a functional module (21) connectable with at least one cable (50), and a cover element (40) mountable on the insert part(20) after building the mounting box (10) into the wall, the mounting box (10) and the insert part (20) being adapted for being able to position the insert part (20) at least in a building-in position and a use position and for moving the insert part (20) from the building-in position to the use position, whereby, in the use position, the insert part (20) partly protrudes out of an open side of the mounting box (10) so that the cover element (40) can be attached to the insert part (20), and whereby, in the building-in position, the insert part (20) does not protrude out of the open side or protrudes less out of the open side than in the use position, whereby the assembly furthermore comprises a cover (30) for closing off an open side of the mounting box (10)in the building-in position of the insert part (20), **characterized in that** the cover (30) is provided with a coupling means (31, 32) for coupling the cover (30) to the insert part (20), and that the coupling means (31, 32) is designed to pull the insert part (20) from the building-in position to the use position when removing the cover (30).

2. Assembly according to claim 1, **characterized in that** the coupling means (31,32) comprises an arm (31) with a snap hook (32) which is adapted to clamp behind the insert part (20).

3. Assembly according to any of the previous claims, **characterized in that** the cover (30) is provided with a grip (37) which can be manipulated by a tool or by a hand of an installer for removing the cover (30).

4. Assembly according to any of the previous claims, **characterized in that** the cover element (40) is a cover frame so dimensioned that, in the use position of the insert part (20), it extends around a from the mounting box protruding part of the functional module (21) of the insert part (20).

5. Assembly according to any of the previous claims, **characterized in that** the insert part (20) is provided with at least two positioning elements (27,28), and that the mounting box (10) is provided at an inner side with a first profiling (18b) determining the building-in position, which is arranged to cooperate with the at least two positioning elements (27, 28), and a second profiling (18c) determining the use position, which is arranged to cooperate with the at least two positioning elements (27,28).

6. Assembly according to claim 5, **characterized in that the** first profiling (18b) and the positioning elements (27,28) are such that the insert part (20) can be pushed or pulled from the building-in position to the use position.

7. Assembly according to any of the previous claims, **characterized in that** the mounting box (10) has a tubular part (11) with an open front end (13) and an open back end (14), and a closing part (12) which is attachable to the open back end (14), whereby the insert part (20) in the use position protrudes out of the open front end (13).

8. Assembly according to any of the previous claims, **characterized in that** the mounting box (10) and the insert part (20) are further adapted to be able to place the insert part (20) in an installation position, in which installation position the at least one cable (50) can be connected with the functional module (21) through the open back end (14) of the tubular part (11), after which the insert part (20) can be brought from the installation position to the building-in position.

9. Assembly according to any of the previous claims, **characterized in that** the mounting box (10) and the insert part (20) are arranged to be moved from the building-in position to the use position via a translation and/or a rotation movement.

10. Method for building a via at least one cable (50) connectable functional module (21) into a prefabricated wall and making it ready to use, the method comprising:
providing a mounting box (10), and an in the mounting box (10) mountable insert part (20) with the functional module (21);
mounting the insert part (20) in a building-in position in the mounting box (10) and closing off an open side of the mounting box (10) intended to be adjacent to the wall surface by providing a cover (30),
placing the mounting box (10) in a mould, whereby the closed side faces the bottom of the mould; pouring wall material into the mould;
transporting the prefabricated wall to a construction site and mounting it,
**characterized in that** the method furthermore comprises:
removing the cover (30) from the side of the mounting box (10) that is adjacent to the surface of the wall and thereby automatically moving the insert part (20) from the building-in position to a use position.

11. Method according to claim 10, **characterized in that** the mounting box (10) is formed with a tear cover which is intended to be adjacent to the surface of the wall.

12. Method according to claim 10 or 11, **characterized in that,** prior to building in the mounting box (10), at least one cable (50) is connected to the functional module (21).

13. Method according to claim 12, **characterized in that** the mounting box (10) comprises a tubular part (11) with an open front end (13) and an open back end (14), and a closing part (12), whereby the at least one cable (50) is connected with the functional module (21) via the open back conclusion (14), after which the closing part (12) is provided against the open back end (14), and whereby the moving the insert part (20) into the use position comprises moving the insert part (20) partly out of the open front end (13).

## Patentansprüche

1. Baugruppe zum Einbau in eine Wand (W), insbesondere in eine vorgefertigten Wand, umfassend einen Montagekasten (10), ein Einsatzteil (20), das in den Montagekasten (10) montierbar ist und ein Funktionsmodul (21) umfasst, das mit zumindest einem Kabel (50) verbindbar ist, und ein Abdeckelement (40), das nach dem Einbau des Montagekastens (10) in die Wand auf dem Einsatzteil (20) montierbar ist, wobei der Montagekasten (10) und das Einsatzteil (20) angepasst sind, damit das Einsatzteil (20) zumindest in einer Einbauposition und in einer Gebrauchsposition positioniert werden kann, und um das Einsatzteil (20) von der Einbauposition in die Gebrauchsposition zu bewegen, wobei das Einsatzteil (20) in der Gebrauchsposition teilweise aus einer offenen Seite des Montagekastens (10) herausragt, sodass das Abdeckelement (40) an dem Einsatzteil (20) befestigt werden kann, und wobei das Einsatzteil (20) in der Einbauposition nicht aus der offenen Seite herausragt oder weniger aus der offenen Seite herausragt als in der Gebrauchsposition, wobei die Baugruppe außerdem eine Abdeckung (30) zum Verschließen einer offenen Seite des Montagekastens (10) in der Einbauposition des Einsatzteils (20) umfasst, **dadurch gekennzeichnet, dass** die Abdeckung (30) mit einem Kopplungsmittel (31, 32) zur Kopplung der Abdeckung (30) an das Einsatzteil (20) ausgestattet ist, und dadurch, dass das Kopplungsmittel (31, 32) konzipiert ist, um das Einsatzteil (20) beim Entfernen der Abdeckung (30) aus der Einbauposition in die Gebrauchsposition zu ziehen.

2. Baugruppe nach Anspruch 1, **dadurch gekennzeichnet, dass** das Kopplungsmittel (31, 32) einen Arm (31) mit einem Karabinerhaken (32) umfasst, der angepasst ist, um hinter dem Einsatzteil (20) zu klemmen.

3. Baugruppe nach einem der vorhergehenden Ansprüche, **dadurch gekennzeichnet, dass** die Abdeckung (30) mit einem Griff (37) ausgestattet ist, der durch ein Werkzeug oder durch eine Hand eines Installateurs zur Entfernung der Abdeckung (30) bedient werden kann.

4. Baugruppe nach einem der vorhergehenden Ansprüche, **dadurch gekennzeichnet, dass** das Abdeckelement (40) ein Abdeckrahmen ist, der so bemessen ist, dass er sich in der Gebrauchsposition des Einsatzteils (20) um ein aus dem Montagekasten herausragenden Teil des Funktionsmoduls (21) des Einsatzteils (20) herum erstreckt.

5. Baugruppe nach einem der vorhergehenden Ansprüche, **dadurch gekennzeichnet, dass** das Einsatzteil (20) mit zumindest zwei Positionierelementen (27, 28) ausgestattet ist und dass der Montagekasten (10) in einer Innenseite mit einer ersten Profilierung (18b) ausgestattet ist, die die Einbauposition bestimmt, die angeordnet ist, um mit den zumindest zwei Positionierelementen (27, 28) zusammenzuwirken, und mit einer zweiten Profilierung (18c), die die Gebrauchsposition bestimmt, die angeordnet ist, um mit den zumindest zwei Positionierelementen (27, 28) zusammenzuwirken.

6. Baugruppe nach Anspruch 5, **dadurch gekennzeichnet, dass** die erste Profilierung (18b) und die Positionierelemente (27, 28) derart sind, dass das Einsatzteil (20) von der Einbauposition in die Gebrauchsposition gedrückt oder gezogen werden kann.

7. Baugruppe nach einem der vorhergehenden Ansprüche, **dadurch gekennzeichnet, dass** der Montagekasten (10) einen rohrförmigen Teil (11) aufweist mit einem offenen vorderen Ende (13) und einem offenen hinteren Ende (14), und ein Verschlussteil (12), das an das offene hintere Ende (14) anbringbar ist, wobei das Einsatzteil (20) in der Gebrauchsposition aus dem offenen vorderen Ende (13) herausragt.

8. Baugruppe nach einem der vorhergehenden Ansprüche, **dadurch gekennzeichnet, dass** der Montagekasten (10) und das Einsatzteil (20) ferner angepasst sind, damit das Einsatzteil (20) in einer Installationsposition platziert werden kann, wobei das zumindest eine Kabel (50) in der Installationsposition durch das offene hintere Ende (14) des rohrförmigen Teils (11) mit dem Funktionsmodul (21) verbunden werden kann, wonach das Einsatzteil (20) von der Installationsposition in die Einbauposition gebracht werden kann.

9. Baugruppe nach einem der vorhergehenden Ansprüche, **dadurch gekennzeichnet, dass** der Montagekasten (10) und das Einsatzteil (20) angeordnet sind, um mittels einer Translation-und/oder Drehbewegung von der Einbauposition in die Gebrauchsposition bewegt zu werden.

10. Verfahren zum Einbau eines Funktionsmoduls (21), das mittels zumindest eines Kabels (50) verbindbar ist, in eine vorgefertigten Wand und Bringen des Funktionsmoduls in einen gebrauchsfertigen Zustand, wobei das Verfahren Folgendes umfasst:
bereitstellen eines Montagekastens (10) und eines in den Montagekasten (10) montierbaren Einsatzteils (20) mit dem Funktionsmodul (21);
montieren des Einsatzteils (20) in eine Einbauposition in dem Montagekasten (10) und Verschließen einer offenen Seite des Montagekastens (10), die zu einer Wandoberfläche benachbart sein soll, durch Bereitstellen einer Abdeckung (30);
platzieren des Montagekastens (10) in eine Form, wobei die geschlossene Seite der Unterseite der Form zugewandt ist;
schütten von Wandmaterial in die Form;
transportieren der vorgefertigten Wand an eine Baustelle und Montieren der Fertigteilwand, **dadurch gekennzeichnet, dass** das Verfahren ferner umfasst:
entfernen der Abdeckung (30) von der Seite des Montagekastens (10), die zu der Oberfläche der Wand benachbart ist, und somit automatisches Bewegen des Einsatzteils (20) von der Einbauposition in die Gebrauchsposition.

11. Verfahren nach Anspruch 10, **dadurch gekennzeichnet, dass** der Montagekasten (10) mit einer Abreißabdeckung geformt ist, die zur Oberfläche der Wand benachbart sein soll.

12. Verfahren nach Anspruch 10 oder 11, **dadurch gekennzeichnet, dass** vor dem Einbau in den Montagekasten (10) zumindest ein Kabel (50) mit dem Funktionsmodul (21) verbunden ist.

13. Verfahren nach Anspruch 12, **dadurch gekennzeichnet, dass** der Montagekasten (10) ein rohrförmiges Teil (11) mit einem offenen vorderen Ende (13) und einem offenen hinteren Ende (14) sowie einem Verschlussteil (12) umfasst, wobei das zumindest eine Kabel (50) mittels des offenen hinteren Abschlusses (14) mit dem Funktionsmodul (21) verbunden ist, wonach das Verschlussteil (12) gegen das offene hintere Ende (14) angeordnet wird und wobei das Bewegen des Einsatzteils (20) in die Gebrauchsposition das Bewegen des Einsatzteils (20) teilweise aus dem offenen vorderen Ende (13) umfasst.

## Revendications

1. Ensemble destiné à être incorporé dans un mur (W), en particulier un mur préfabriqué, comprenant une boîte de montage (10), une partie d'insertion (20) pouvant être monté dans la boîte de montage (10) et comprenant un module fonctionnel (21) pouvant être raccordé à au moins un câble (50), et un élément de couverture (40) pouvant être monté sur la partie d'insertion (20) après avoir incorporé la boîte de montage (10) dans le mur, la boîte de montage (10) et la partie d'insertion (20) étant adaptés pour pouvoir positionner la partie d'insertion (20) au moins dans une position incorporée et une position d'utilisation et pour déplacer la partie d'insertion (20) de la position incorporée à la position d'utilisation; où, dans la position d'utilisation, la partie d'insertion (20) fait saillie an partie par un côté ouvert de la boîte de montage (10) de sorte que l'élément de couverture (40) peut être fixé à la partie d'insertion (20) et, dans la position incorporée, la partie d'insertion (20) ne fait pas saillie du côté ouvert ou fait moins saillie du côté ouvert qu'en position d'utilisation, où l'ensemble comprend en outre un couverture (30) destiné à fermer le côté ouvert de la boîte de montage (10) dans la position incorporée de la partie d'insertion (20), **caractérisé en ce que** le couverture (30) est pourvu d'un moyen d'accouplement (31, 32) destiné à accoupler le couverture (30) à la partie d'insertion (20), et **en ce que** le moyen d'accouplement (31, 32) est conçu pour tirer la partie d'insertion (20) de la position incorporée à la position d'utilisation quand on enlève le couverture (30).

2. Ensemble selon la revendication 1, **caractérisé en ce que** le moyen d'accouplement (31, 32) comprend un bras (31) pourvu d'un crochet à encliquetage (32) adapté pour se fixer derrière la partie d'insertion (20).

3. Ensemble selon l'une quelconque des revendications précédentes, **caractérisé en ce que** le couverture (30) est pourvu d'une poignée (37) qui peut être manipulé par un outil ou à la main par un installateur pour enlever le couverture (30).

4. Ensemble selon l'une quelconque des revendications précédentes, **caractérisé en ce que** l'élément de couverture (40) est un cadre de couverture dimensionné de façon qu'en position d'utilisation de la partie d'insertion (20), il s'étende autour d'une partie du module fonctionnel (21) de la partie d'insertion (20) qui fait saillie de la boîte de montage.

5. Ensemble selon l'une quelconque des revendications précédentes, **caractérisé en ce que** la partie d'insertion (20) est pourvu d'au moins deux éléments de positionnement (27, 28) et **en ce que** la boîte de montage (10) est pourvue sur un côté interne d'un premier profilage (18b) qui détermine la position incorporée et qui est conçu pour coopérer avec les au moins deux éléments de positionnement (27, 28) et un deuxième profilage (18c) qui détermine la position d'utilisation et qui est conçu pour coopérer avec les au moins deux éléments de positionnement (27, 28).

6. Ensemble selon la revendication 5, **caractérisé en ce que** le premier profilage (18b) et les éléments de positionnement (27, 28) sont tels que la partie d'insertion (20) peut être poussé ou tiré depuis la position incorporée vers la position d'utilisation.

7. Ensemble selon l'une quelconque des revendications précédentes, **caractérisé en ce que** la boîte de montage (10) a une partie tubulaire (11) pourvue d'une extrémité avant ouverte (13) et d'une extrémité arrière ouverte (14), et une partie de fermeture (12) attachable à l'extrémité arrière ouverte (14), la partie d'insertion (20) en position d'utilisation faisant saillie de l'extrémité avant ouverte (13).

8. Ensemble selon l'une quelconque des revendications précédentes, **caractérisé en ce que** la boîte de montage (10) et la partie d'insertion (20) sont en outre adaptés pour pouvoir placer la partie d'insertion (20) dans une position d'installation dans laquelle l'au moins un câble (50) peut être connecté au module fonctionnel (21) à travers l'extrémité arrière ouverte (14) de la partie tubulaire (11), après quoi la partie d'insertion (20) peut être ramené de la position d'installation à la position incorporée.

9. Ensemble selon l'une quelconque des revendications précédentes, **caractérisé en ce que** la boîte de montage (10) et la partie d'insertion (20) sont adaptés de façon à être déplacés de la position incorporée à la position d'utilisation par un mouvement de translation et/ou de rotation.

10. Procédé pour incorporer un module fonctionnel (21) pouvant être relié au moyen d'au moins un câble (50) dans un mur préfabriqué et le rendre prêt à l'emploi, le procédé comprenant:
fournir une boîte de montage (10) et une partie d'insertion (20) avec la module fonctionnel (21) pouvant être monté dans la boîte de montage (10);
monter la partie d'insertion (20) dans une position incorporée dans la boîte de montage (10) et fermer un côté ouvert de la boîte de montage (10) destiné à être adjacent à la surface du mur au moyen d'un couverture (30);
disposer la boîte de montage (10) dans un moule, le côté fermé faisant face au fond du moule;
déverser le matériau du mur dans le moule;
transporter le mur préfabriqué à une site de construction et monter ledit mur;
**caractérisé en ce que** le procédé comprend en outre:
enlever le couverture (30) du côté de la boîte de montage (10) adjacent à la surface du mur, déplaçant ainsi automatiquement la partie d'insertion (20) de la position incorporée dans une position d'utilisation.

11. Procédé selon la revendication 10, **caractérisé en ce que** la boîte de montage (10) est formée avec un couverture déchirable destiné à être adjacent à la surface du mur.

12. Procédé selon la revendication 10 ou 11, **caractérisé en ce qu**'avant incorporation dans la boîte de montage (10), au moins un câble (50) est connecté au module fonctionnel (21).

13. Procédé selon la revendication 12, **caractérisé en ce que** la boîte de montage (10) comprend une partie tubulaire (11) pourvue d'une extrémité avant ouverte (13) et d'une extrémité arrière ouverte (14), et une partie de fermeture (12), l'au moins un câble (50) étant connecté au module fonctionnel (21) via l'extrémité arrière ouverte (14), après quoi la partie de fermeture (12) est placée contre l'extrémité arrière ouverte (14), et le déplacement de la partie d'insertion (20) en position d'utilisation comprend le déplacement de la partie d'insertion (20) en partie hors de l'extrémité avant ouverte (13).
